# FASCICULE DE BREVET EUROPEEN

(11) **EP 3 057 443 B1**
(45) Date de publication et mention de la délivrance du brevet: **01.05.2019**
(21) Numéro de dépôt: 14796826.7
(22) Date de dépôt: 17.10.2014
(51) Int. Cl.: A23L 17/60, A21D 2/26

(54) **PROCEDE DE TEXTURATION D'UNE BIOMASSE DE MICROALGUES**
VERFAHREN ZUM TEXTURIEREN EINER MIKROALGEN-BIOMASSE
PROCESS FOR TEXTURING A MICROALGAL BIOMASS

(30) Priorité: 18.10.2013 FR 1360202
(43) Date de publication de la demande: 24.08.2016
(73) Titulaire: Corbion Biotech, Inc., South San Francisco, CA 94080 (US)
(72) Inventeur: PASSE, Damien, F-59500 Douai (FR)
(74) Mandataire: Cabinet Becker et Associés
(86) Numéro de dépôt international: PCT/FR2014/052648
(87) Numéro de publication internationale: WO 2015/055965

(56) Documents cités:
- EP-A1- 2 348 091
- WO-A1-2010/120923
- US-A1- 2010 303 990
- US-A1- 2011 256 282
- US-A1- 2013 122 180

## Description

La présente invention concerne un procédé de texturation d'une biomasse de microalgues, de préférence de microalgues du genre *Chlorella,* plus particulièrement *Chlorella protothecoides ou Chlorella sorokiniana.*

Il est bien connu de l'homme du métier que les microalgues du genre *Chlorella* sont une source potentielle de nourriture, car elles sont riches en protéines et autres nutriments essentiels.

En moyenne, elles renferment 45% de protéines, 20% de matières grasses, 20% de glucides, 5% de fibres et 10% de minéraux et de vitamines.

La fraction huile de la biomasse de *Chlorella,* qui se compose essentiellement d'huiles monoinsaturées, fournit ainsi des avantages nutritionnels et santé par rapport aux huiles saturées, hydrogénées et polyinsaturées souvent trouvées dans les produits alimentaires conventionnels.

Les chlorelles sont donc exploitées en alimentation humaine ou animale, soit sous la forme de biomasse entière, soit sous la forme de farine, obtenue par séchage de la biomasse de chlorelles dont la paroi cellulaire a été rompue par des moyens notamment mécaniques.

La farine de microalgues fournit également d'autres bénéfices, comme des micronutriments, des fibres alimentaires (glucides solubles et insolubles), des phospholipides, des glycoprotéines, des phytostérols, tocophérols, tocotriénols, et du sélénium.

Pour préparer la biomasse qui entrera dans la composition des aliments, la biomasse est concentrée, ou récoltée, du milieu de culture (culture réalisée par autotrophie à la lumière en photobioréacteurs, ou en hétérotrophie, à l'obscurité en présence d'une source carbonée assimilable par les Chlorelles).

Dans le domaine technique auquel s'adresse l'invention, la croissance des Chlorelles par voie hétérotrophique est préférée (voie dite fermentaire).

Au moment de la récolte de la biomasse de microalgues du milieu de fermentation, la biomasse comprend des cellules intactes pour l'essentiel en suspension dans un milieu de culture aqueux.

Pour concentrer la biomasse, on procède alors à une étape de séparation solide-liquide, par filtration frontale ou tangentielle, ou par centrifugation, par tout moyen connu par ailleurs de l'homme du métier.

Après concentration, la biomasse de microalgues peut être directement traitée afin de produire des gâteaux emballés sous vide, des paillettes d'algues, des homogénats d'algues, de la farine d'algues intactes, de la farine d'algues broyées, ou de l'huile d'algues.

On procède également au séchage de la biomasse de microalgues pour faciliter le traitement ultérieur ou pour une utilisation de la biomasse dans ses différentes applications, notamment alimentaires.

Pour conférer de la texture et/ou de la saveur à cette farine de microalgues (broyées ou non) incorporée dans des aliments, il est classiquement choisi par l'homme du métier de sécher la biomasse en mettant en oeuvre différentes méthodes de séchage.

Par exemple, le brevet US 6.607.900 décrit le séchage de la biomasse de microalgues en utilisant un séchoir à tambour sans centrifugation préalable, pour préparer des flocons (« flakes ») de microalgues.

De la poudre de microalgues peut être préparée à partir de la biomasse de microalgues concentrées à l'aide d'un sécheur pneumatique ou par atomisation, comme décrit dans le brevet US 6.372.460.

Dans un atomiseur, une suspension liquide est alors pulvérisée sous la forme d'une dispersion de fines gouttelettes dans un courant d'air chauffé. Le matériel entraîné est rapidement séché et forme une poudre sèche.

Dans d'autres cas, une combinaison d'un séchage par atomisation suivi de l'utilisation d'un séchoir à lit fluidisé est mise en oeuvre pour atteindre les conditions améliorées d'obtention d'une biomasse microalgale séchée (voir, par exemple, le brevet US 6.255.505).

Le brevet US 2011/256282 A1 décrit un procédé de fabrication d'un produit alimentaire aéré qui comprend le mélange de farine d'algues avec de l'eau de manière à effectuer une dispersion et le brevet WO 2010/120923 A1 décrit un mélange formé en dispersant de la farine d'algues dans de l'eau et que la teneur en matière sèche de la farine est comprise entre 10 et 50% en poids du mélange.

Dans le domaine technique auquel s'adresse l'invention, on recherche plus particulièrement à préparer une farine d'algues produites par voie fermentaire présentant une texture particulière, caractérisée par son pouvoir gélifiant, nappant ou sa capacité à conférer un caractère onctueux aux aliments dans lesquels elle sera incorporée.

Or les différentes méthodes de séchage classiquement mises en oeuvre par l'homme du métier ne permettent pas d'obtenir ce résultat. Ainsi, une farine de microalgues riches en protéines est généralement préparée à partir de la biomasse de microalgues non broyée, concentrée, ensuite atomisée ou flash-séchée.

Par ailleurs la farine de microalgues riche en lipides est généralement préparée à partir de la biomasse de microalgues qui a été mécaniquement lysée et homogénéisée, l'homogénat étant ensuite atomisé ou flash-séché.

Dans ce deuxième cas de figure, la production de farine d'algues nécessite en effet que les cellules soient lysées pour libérer leur huile.

Par exemple, un disrupteur à pression peut être utilisé pour pomper une suspension contenant les cellules à travers un orifice restreint pour lyser les cellules.

Une pression élevée (jusqu'à 1500 bar) est appliquée, suivie d'une expansion instantanée à travers une buse.

Le cassage des cellules peut être réalisé par trois mécanismes différents : empiètement sur la vanne, cisaillement élevé du liquide dans l'orifice, et chute de pression soudaine en sortie, provoquant une explosion de la cellule.

La méthode libère des molécules intracellulaires.

Un homogénéisateur NIRO Homogenizer Niro (GEA NIRO SOAVI) - ou tout autre homogénéisateur haute pression peut être utilisé pour traiter des cellules présentant une taille majoritairement comprise entre 0,2 et 5 microns.

Ce traitement de la biomasse algale sous haute pression (environ 1000 bar) lyse généralement plus de 90 % des cellules et réduit la taille à moins de 5 microns.

De manière alternative, un broyeur à billes est plutôt utilisé.

Dans un broyeur à billes, les cellules sont agitées en suspension avec de petites particules sphériques. Le cassage des cellules est provoqué par les forces de cisaillement, le broyage entre les billes, et les collisions avec des billes.

Ces billes cassent les cellules pour en libérer le contenu cellulaire. La description d'un broyeur à billes approprié est par exemple faite dans le brevet US 5.330.913.

On obtient alors une suspension de particules de plus petite taille que les cellules d'origine sous la forme d'une émulsion « huile dans eau ».

Cette émulsion est ensuite atomisée et l'eau est éliminée, laissant une poudre sèche contenant les débris cellulaires, du liquide intracellulaire et de l'huile.

Cependant, renfermant de l'huile à une teneur de 10%, 25% voire 50% en poids de la poudre sèche, on peut déplorer l'obtention d'une poudre apparaissant adhésive et cohésive, qui s'écoule difficilement.

Les hautes teneurs en lipides (plus de 60 %) sont même considérées comme encore plus difficiles, voire impossibles à sécher de façon efficace.

Il est également déploré des problèmes de mouillabilité et de dispersibilité dans l'eau des farines de biomasse séchées.

Par ailleurs, ces farines de microalgues ne présentent aucune tenue, et ne peuvent être mises en oeuvre dans des formulations alimentaires pour leur caractère nappant, gélifiant ni même onctueux.

### Objet de l'invention

Il existe donc encore un besoin non satisfait pour de nouvelles formes texturées de farine de biomasse de microalgues (broyées ou non) afin de permettre leur incorporation aisée, à grande échelle, dans des produits alimentaires qui doivent rester savoureux et nutritifs.

La Société Demanderesse a trouvé que ce besoin pouvait être satisfait en proposant un procédé de texturation de la farine de biomasse de microalgues qui comprend les étapes suivantes :
(a) introduire de l'eau, de la farine de microalgues, et optionnellement une source de protéines végétales, dans un mélangeur solide-liquide,
(b) émulsionner et homogénéiser le contenu du mélangeur solide-liquide,
(c) de manière optionnelle, mettre sous basse pression ou sous vide l'espace interne du mélangeur, caractérisé en ce que les étapes (b) et (c) sont conduites jusqu'à obtention d'un mélange pâteux émulsionné homogène.

Dans l'étape (a) la farine de microalgues est introduite de manière à ce que sa teneur en matière sèche soit comprise entre 20 et 50 % en poids, de préférence entre 25 et 45 % en poids du mélange.

La source de protéines végétales peut être choisie dans le groupe constitué de la biomasse ou la farine de biomasse de microalgues riches en protéines, les céréales, les oléagineux, les légumineuses et les tubercules, utilisés seuls ou en combinaison.

Ces sources de protéines végétales sont introduites dans le milieu réactionnel à hauteur de 10 à 50 % en poids sec dudit mélange.

De manière préférentielle, les étapes (b) et (c) sont opérées :
- jusqu'à obtention d'un mélange pâteux émulsionné homogène, et
- à une température maximale comprise entre 50 °C et 90°C, et / ou
- à un taux de cisaillement de plus d'environ 2 000 s⁻¹, de préférence à un taux de cisaillement compris entre 2 500 et 10 000 s⁻¹, et/ou
- jusqu'à ce qu'une conversion de phase du contenu du mélangeur solide-liquide ait lieu, et/ou
- jusqu'à ce qu'une augmentation de la viscosité du contenu du mélangeur solide-liquide soit détectée et/ou sa couleur devienne blanche, et/ou
- jusqu'à ce que l'on obtienne un diamètre moyen (D mode mesuré par granulométrie laser) des gouttelettes d'émulsion de moins de 10 µm.

Conformément à la présente invention, l'étape (b) et/ou l'étape (c) peut (peuvent) être effectuée(s) à une température comprise entre 50 °C et 90 °C, de préférence à une température comprise entre 65°C et 85 °C.

Conformément à la présente invention, dans l'étape (b), la température peut être augmentée jusqu'à sa valeur maximale après le mélange des composants.

Conformément à la présente invention, l'étape (b) et/ou l'étape (c) est (sont) conduite(s) pendant au moins 1 minute, de préférence entre 1 et 20 minutes, de préférence entre 1 à 5 minutes.

Conformément à la présente invention, l'étape (b) et/ou l'étape (c) peut (peuvent) être effectuée(s) jusqu'à ce que l'on amène le milieu réactionnel à une plus grande viscosité.

Conformément à la présente invention, l'étape (b) et l'étape (c) sont effectuées :
- au moins partiellement en même temps,
- simultanément ou
- l'une après l'autre.

Conformément à l'invention, le mélange pâteux émulsionné homogène peut être pasteurisé. La pasteurisation peut s'effectuer dans l'étape (b) et/ou l'étape (c) et par la suite. Si la pasteurisation est effectuée à l'étape (b), la température est de préférence portée à une première température, par exemple 60°C et par la suite, portée à une deuxième température, par exemple 65 °C, où la pasteurisation a lieu.

Conformément à l'invention, le mélange pâteux émulsionné homogène peut être traité à haute température pendant un temps court (procédé dit « High Temperature Short Time » ou HTST ou Ultra Haute Température ou UHT).

Ce traitement peut s'effectuer dans l'étape (b) et/ou l'étape (c) et par la suite. Si le traitement HTST est effectué à l'étape (b), la température est portée à une valeur inférieure à 100 °C, pendant 30 secondes à 5 min.

Selon un autre aspect de l'invention, il est proposé un procédé de texturation de la farine de biomasse de microalgues, qui comprend les étapes suivantes :
(a) introduire de l'eau, de la farine de microalgues et optionnellement une source de protéines végétales dans un mélangeur solide-liquide,
(b) émulsionner et homogénéiser le contenu du mélangeur solide-liquide,
(c) mettre sous basse pression ou sous vide l'espace interne du mélangeur, lorsqu'est obtenu au terme de l'étape (b) un mélange pâteux émulsionné homogène,
(d) stériliser la pâte sous forme émulsionnée homogène,

Selon l'invention, le mélange pâteux émulsionné homogène peut être chauffé dans l'étape (d) à une température supérieure à environ 120°C, de préférence supérieure à environ 130 °C, et encore plus préférentiellement à une température supérieure à environ 140°C.

Conformément à l'invention, le mélange pâteux émulsionné homogène peut être stérilisé à l'étape (d) pendant plus de 1 seconde environ, de préférence pendant plus de 2 secondes environ, et de préférence pendant environ 3 secondes.

Selon l'invention, le mélange pâteux émulsionné homogène peut être stérilisé à l'étape (d) pendant moins de 5 secondes, de préférence pendant moins de 4 secondes environ, et de préférence pendant environ 3 secondes.

Conformément à la présente invention, dans l'étape (d) le chauffage par infusion de vapeur peut être utilisé pour le chauffage du mélange pâteux émulsionné homogène.

Selon la présente invention, à l'étape (d), le mélange pâteux émulsionné homogène peut être préchauffé à une première température de traitement thermique et ensuite chauffé à la température finale de traitement thermique.

Conformément à l'invention, la première température de traitement thermique peut être une température supérieure à 75° C, de préférence plus de 80 °C et de préférence d'environ 85°C.

Conformément à l'invention, la température finale de traitement thermique peut être une température supérieure à environ 120°C, de préférence supérieure à 130 °C, et de préférence une température d'environ 140°C.

Selon la présente invention, à l'étape (d), la pâte émulsionnée homogène peut être préchauffée au moyen d'un échangeur thermique indirect ou d'un échangeur de chaleur de surface, par injection de vapeur.

Le procédé conforme à la présente invention peut également comprendre l'étape suivante:
(e) refroidissement de la pâte émulsionnée homogène traitée thermiquement après l'étape (d).
conformément à la présente invention, à l'étape (e), la pâte émulsionnée homogène peut être refroidie au moyen d'un échangeur de chaleur, de préférence par l'intermédiaire d'un échangeur de chaleur à surface raclée ou par refroidissement flash dans un récipient sous vide.

Selon la présente invention, à l'étape (e), la température de la pâte émulsionnée homogène peut être refroidie à une température inférieure à environ 45°C, de préférence inférieure à environ 40 °C.

Le procédé conforme à la présente invention peut également comprendre l'étape suivante:
(f) addition de composés favorisant la formation de la pâte émulsionnée homogène, après l'étape (e) et / ou l'étape (d).

Ces composés favorisant la formation de la pâte émulsionnée homogène sont choisis dans le groupe constitué des phospholipides, des mono-, di-, triglycérides et des gommes.

Selon l'invention, la pâte émulsionnée homogène peut avoir une teneur en matière sèche de 20 à 65% en poids et de préférence de 40 à 50 % en poids.

Conformément à l'invention, la teneur en matière sèche totale de la pâte émulsionnée homogène après refroidissement flash est comprise entre 45 et 65 %.

Selon un aspect de l'invention, il est prévu un mélangeur solide-liquide et des moyens de stérilisation.

Selon l'invention, les moyens de stérilisation peuvent comprendre un dispositif de chauffage par injection de vapeur.

Selon un aspect de l'invention, on propose un dispositif comprenant un mélangeur solide-liquide et des moyens de chauffage, caractérisé en ce que les moyens de chauffage comprennent un dispositif de chauffage par injection de vapeur.

Le mélangeur solide-liquide utilisé peut être n'importe quel mélangeur capable d'effectuer le mélange de solides et liquides à la température désirée et le taux de cisaillement désirés. Le mélangeur doit avoir une puissance suffisante pour fournir un taux de cisaillement d'au moins 5000 s⁻¹, de préférence d'au moins 10 000 s⁻¹. Il peut être doté de moyens permettant de faire le vide afin d'appliquer une faible pression ou le vide dans l'espace de tête du mélangeur solide-liquide.

## Revendications

1. Procédé de texturation de la farine de biomasse de microalgues, qui comprend les étapes suivantes :
(a) introduire de l'eau, de la farine de microalgues et optionnellement une source de protéines végétales dans un mélangeur solide-liquide,
(b) émulsionner et homogénéiser le contenu du mélangeur solide-liquide,
(c) de manière optionnelle, mettre sous basse pression ou sous vide l'espace interne du mélangeur,
**caractérisé en ce que** les étapes (b) et (c) sont conduites jusqu'à obtention d'un mélange pâteux émulsionné homogène.

2. Procédé selon la revendication 1, **caractérisé en ce que** dans l'étape (a) la farine de microalgues est introduite de manière à ce que sa teneur en matière sèche soit comprise entre 20 et 50 % en poids, de préférence entre 25 et 45 %, en poids du mélange.

3. Procédé selon l'une quelconque des revendications 1 à 2, **caractérisé en ce que** les étapes (b) et (c) sont conduites à une température comprise entre 50 °C et 90 °C, de préférence à une température comprise entre 65 °C et 85°C.

4. Procédé selon l'une quelconque des revendications 1 à 3, **caractérisé en ce que** les étapes (b) et (c) sont conduites à un taux de cisaillement de plus d'environ 2 000 s⁻¹, de préférence compris entre 2 500 et 10 000 s⁻¹.

5. Procédé selon l'une quelconque des revendications 1 à 4, **caractérisé en ce que** les étapes (b) et (c) sont conduites jusqu'à ce qu'une conversion de phase du contenu du mélangeur solide-liquide ait lieu.

6. Procédé selon l'une quelconque des revendications 1 à 5, **caractérisé en ce que** les étapes (b) et (c) sont conduites à une température permettant une conversion de phase du contenu du mélangeur solide-liquide.

7. Procédé selon l'une quelconque des revendications 1 à 6, **caractérisé en ce que** les étapes (b) et (c) sont conduites jusqu'à ce qu'une augmentation de la viscosité du contenu du mélangeur solide-liquide soit détectée et/ou que sa couleur devienne blanche.

8. Procédé selon l'une quelconque des revendications 1 à 7, **caractérisé en ce que** les étapes (b) et (c) sont conduites jusqu'à ce que l'on obtienne un diamètre moyen (D mode mesuré par granulométrie laser) des gouttelettes d'émulsion de moins de 10 µm.

9. Procédé selon l'une quelconque des revendications 1 à 8, **caractérisé en ce que** les étapes (b) et (c) sont conduites pendant au moins 1 minute, de préférence entre 1 et 20 minutes, de préférence entre 1 à 5 minutes.

10. Procédé selon l'une quelconque des revendications 1 à 9 **caractérisé en ce que** les étapes (b) et (c) sont conduites :
- au moins partiellement en même temps,
- simultanément ou
- l'une après l'autre.

11. Procédé selon la revendication 1, **caractérisé en ce qu'**il comprend une étape (d) de stérilisation.

12. Procédé selon la revendication 11, **caractérisé en ce que** l'étape (d) consiste à chauffer la pâte émulsionnée homogène à une température supérieure à environ 120°C, de préférence supérieure à environ 130°C, et de préférence supérieure à environ 140 °C., pendant moins de 5 secondes, de préférence pendant moins de 4 secondes environ, et de préférence pendant environ 3 secondes.

13. Procédé selon l'une ou l'autre des revendications 11 et 12, **caractérisé en ce qu'**il comprend une étape (e) de refroidissement de la pâte émulsionnée homogène traitée thermiquement après l'étape (d).

14. Procédé selon la revendication 13, **caractérisé en ce que** la température de la pâte émulsionnée homogène est refroidie à une température inférieure à environ 45 °C, de préférence inférieure à environ 40°C.

15. Procédé selon l'une ou l'autre des revendications 13 et 14, **caractérisé en ce qu'**il comprend une étape (f) qui consiste en l'addition de composés favorisant la formation de la pâte émulsionnée homogène, après l'étape (e) et / ou l'étape (d).

16. Procédé selon la revendication 15, **caractérisé en ce que** les composés favorisant la formation de la pâte émulsionnée homogène sont choisis dans le groupe constitué des phospholipides, des mono-, di-, triglycérides et des gommes.

## Patentansprüche

1. Verfahren zum Texturieren von Mikroalgen-Biomassemehl, das die folgenden Schritte umfasst:
(a) Zugeben von Wasser, Mikroalgenmehl und gegebenenfalls einer pflanzlichen Proteinquelle in einen Fest-Flüssig-Mischer,
(b) Emulgieren und Homogenisieren des Inhalts des Fest-Flüssig-Mischers,
(c) gegebenenfalls Anlegen eines Unterdrucks oder eines Vakuums im Innerraum des Mischers,
**dadurch gekennzeichnet, dass** die Schritte (b) und (c) bis zum Erhalt einer homogenen emulgierten Teigmischung durchgeführt werden.

2. Verfahren gemäß Anspruch 1, **dadurch gekennzeichnet, dass** in Schritt (a) das Mikroalgenmehl auf eine Weise zugegeben wird, dass sein Trockenmassegehalt zwischen 20 und 50 Gew.-%, vorzugsweise zwischen 25 und 45 Gew.-% der Mischung beträgt.

3. Verfahren gemäß einem der Ansprüche 1 bis 2, **dadurch gekennzeichnet, dass** die Schritte (b) und (c) bei einer Temperatur zwischen 50°C und 90°C, vorzugsweise bei einer Temperatur zwischen 65°C und 85°C durchgeführt werden.

4. Verfahren gemäß einem der Ansprüche 1 bis 3, **dadurch gekennzeichnet, dass** die Schritte (b) und (c) bei einer Scherrate von mehr als ungefähr 2.000 s⁻¹, vorzugsweise zwischen 2.500 und 10.000 s⁻¹ durchgeführt werden.

5. Verfahren gemäß einem der Ansprüche 1 bis 4, **dadurch gekennzeichnet, dass** die Schritte (b) und (c) durchgeführt werden, bis eine Phasenkonversion des Inhalts des Fest-Flüssig-Mischers stattfindet.

6. Verfahren gemäß einem der Ansprüche 1 bis 5, **dadurch gekennzeichnet, dass** die Schritte (b) und (c) bei einer Temperatur durchgeführt werden, die eine Phasenkonversion des Inhalts des Fest-Flüssig-Mischers zulässt.

7. Verfahren gemäß einem der Ansprüche 1 bis 6, **dadurch gekennzeichnet, dass** die Schritte (b) und (c) durchgeführt werden, bis eine Viskositätserhöhung des Inhalts des Fest-Flüssig-Mischers festgestellt wird und/oder der Inhalt eine weiße Farbe einnimmt.

8. Verfahren gemäß einem der Ansprüche 1 bis 7, **dadurch gekennzeichnet, dass** die Schritte (b) und (c) durchgeführt werden, bis ein mittlerer Durchmesser (D mode, gemessen mittels Laser-Granulometrie) der Emulsionströpfchen von weniger als 10 µm erhalten wird.

9. Verfahren gemäß einem der Ansprüche 1 bis 8, **dadurch gekennzeichnet, dass** die Schritte (b) und (c) mindestens 1 Minute, vorzugsweise zwischen 1 und 20 Minuten, vorzugsweise zwischen 1 und 5 Minuten durchgeführt werden.

10. Verfahren gemäß einem der Ansprüche 1 bis 9, **dadurch gekennzeichnet, dass** die Schritte (b) und (c) durchgeführt werden:
- wenigstens teilweise zur gleichen Zeit,
- gleichzeitig oder
- nacheinander.

11. Verfahren gemäß Anspruch 1, **dadurch gekennzeichnet, dass** es einen Sterilisationsschritt (d) umfasst.

12. Verfahren gemäß Anspruch 11, **dadurch gekennzeichnet, dass** Schritt (d) aus Erhitzen des homogenen emulgierten Teigs auf eine Temperatur über ungefähr 120°C, vorzugsweise über ungefähr 130°C und vorzugsweise über ungefähr 140°C von weniger als 5 Sekunden, vorzugsweise von weniger als 4 Sekunden und vorzugsweise von ungefähr 3 Sekunden besteht.

13. Verfahren gemäß einem der Ansprüche 11 und 12, **dadurch gekennzeichnet, dass** es einen Schritt (e) der Abkühlung des thermisch behandelten homogenen emulgierten Teigs nach Schritt (d) umfasst.

14. Verfahren gemäß Anspruch 13, **dadurch gekennzeichnet, dass** die Temperatur des homogenen emulgierten Teigs auf eine Temperatur unter ungefähr 45°C, vorzugsweise unter ungefähr 40°C abgekühlt wird.

15. Verfahren gemäß einem der Ansprüche 13 und 14, **dadurch gekennzeichnet, dass** es einen Schritt (f) umfasst, der aus der Zugabe von Verbindungen besteht, die die Bildung des homogenen emulgierten Teigs nach Schritt (e) und/oder Schritt (d) fördern.

16. Verfahren gemäß Anspruch 15, **dadurch gekennzeichnet, dass** die Verbindungen, die die Bildung des homogenen emulgierten Teigs fördern, ausgewählt sind aus der Gruppe, bestehend aus Phospholipiden, Mono-, Di-, Triglyceriden und Gummi.

## Claims

1. A process for texturing microalgal biomass flour, which comprises the following steps:
(a) introducing water, microalgal flour and, optionally, a vegetable protein source into a solid-liquid mixer,
(b) emulsifying and homogenizing the content of the solid-liquid mixer,
(c) optionally, placing the internal space of the mixer at low pressure or under vacuum,
**characterized in that** steps (b) and (c) are carried out until a homogeneous emulsified pasty mixture is obtained.

2. The process as claimed in claim 1, **characterized in that**, in step (a), the microalgal flour is introduced in such a way that its solids content is between 20% and 50% by weight, preferably between 25% and 45% by weight of the mixture.

3. The process as claimed in any one of claims 1 and 2, **characterized in that** steps (b) and (c) are carried out at a temperature of between 50°C and 90°C, preferably at a temperature of between 65°C and 85°C.

4. The process as claimed in any one of claims 1 to 3, **characterized in that** steps (b) and (c) are carried out at a shear rate of more than approximately 2000 s⁻¹, preferably of between 2500 and 10 000 s⁻¹.

5. The process as claimed in any one of claims 1 to 4, **characterized in that** steps (b) and (c) are carried out until phase conversion of the content of the solid-liquid mixer takes place.

6. The process as claimed in any one of claims 1 to 5, **characterized in that** steps (b) and (c) are carried out at a temperature which allows phase conversion of the content of the solid-liquid mixer.

7. The process as claimed in any one of claims 1 to 6, **characterized in that** steps (b) and (c) are carried out until an increase in the viscosity of the content of the solid-liquid mixer is detected and/or its color turns white.

8. The process as claimed in any one of claims 1 to 7, **characterized in that** steps (b) and (c) are carried out until an average diameter (D mode measured by laser particle size analysis) of the emulsion droplets of less than 10 µm is obtained.

9. The process as claimed in any one of claims 1 to 8, **characterized in that** steps (b) and (c) are carried out for at least 1 minute, preferably between 1 and 20 minutes, preferably between 1 and 5 minutes.

10. The process as claimed in any one of claims 1 to 9, **characterized in that** steps (b) and (c) are carried out:
- at least partially at the same time,
- simultaneously or
- one after the other.

11. The process as claimed in claim 1, **characterized in that** it comprises a sterilizing step (d).

12. The process as claimed in claim 11, **characterized in that** step (d) consists in heating the homogeneous emulsified paste at a temperature above approximately 120°C, preferably above approximately 130°C, and preferably above approximately 140°C, for less than 5 seconds, preferably for less than approximately 4 seconds, and preferably for approximately 3 seconds.

13. The process as claimed in either of claims 11 and 12, **characterized in that** it comprises a step (e) of cooling the heat-treated homogeneous emulsified paste after step (d).

14. The process as claimed in claim 13, **characterized in that** the temperature of the homogeneous emulsified paste is cooled to a temperature below approximately 45°C, preferably below approximately 40°C.

15. The process as claimed in either of claims 13 and 14, **characterized in that** it comprises a step (f) which consists of the addition of compounds which promote the formation of the homogeneous emulsified paste, after step (e) and/or step (d).

16. The process as claimed in claim 15, **characterized in that** the compounds which promote the formation of the homogeneous emulsified paste are chosen from the group consisting of phospholipids, mono-, di- and triglycerides, and gums.
